Europäisches Patentamt

European Patent Office

Office européen des brevets

(11) Numéro de publication: **0 120 755**
A1

# (12) DEMANDE DE BREVET EUROPEEN

(21) Numéro de dépôt: 84400445.7

(22) Date de dépôt: 06.03.84

(51) Int. Cl.³: **F 24 J 3/02**
A 01 G 9/22, E 04 F 10/06

(30) Priorité: 08.03.83 FR 8303766

(43) Date de publication de la demande:
03.10.84 Bulletin 84/40

(84) Etats contractants désignés:
BE CH DE GB IT LI LU NL

(71) Demandeur: TECHNAL-FRANCE
270 rue Léon Joulin
F-31037 Toulouse Cedex(FR)

(72) Inventeur: Stoll, Nicole
8, rue Croix-Baragnon
F-31000 Toulouse(FR)

(72) Inventeur: Cavalie, Jean-François
Chemin des Clottes
F-81600 Gaillac(FR)

(72) Inventeur: Cachia, Yves
Chemin d'en Poutet
F-31320 Escalquens(FR)

(74) Mandataire: Martin, Jean-Jacques et al,
Cabinet REGIMBEAU 26, Avenue Kléber
F-75116 Paris(FR)

(54) Dispositif de contrôle de l'énergie solaire traversant une toiture transparente, en particulier pour serre ou véranda.

(57) La présente invention concerne un dispositif pour le contrôle de l'énergie solaire traversant une toiture transparente d'un local. Le dispositif comprend une pluralité de dièdres (10) parallèles entre eux et présentant chacun une première aile (11) faiblement inclinée sur l'horizontale et opaque pour occulter les rayons solaires en période estivale, une seconde aile (12) fortement inclinée sur l'horizontale et munie d'une surface (13) réfléchissante de telle sorte qu'en période hivernale, les rayons solaires qui frappent cette dernière soient renvoyés en direction de la paroi transparente de la toiture selon une incidence faible par rapport à la normale à celle-ci afin de la traverser, et des moyens supports (50) pour fixer les dièdres (10) sur la toiture (40).

./...

Croydon Printing Company Ltd.

FIG_1

## DISPOSITIF DE CONTROLE DE L'ENERGIE SOLAIRE TRAVERSANT UNE TOITURE TRANSPARENTE, EN PARTICULIER POUR SERRE OU VERANDA

La présente invention concerne le domaine de l'exploitation de l'énergie solaire.

Plus précisément, la présente invention concerne un dispositif pour le contrôle de l'énergie solaire traversant une toiture transparente d'un local.

Tel que cela apparaîtra à la lecture de la description qui va suivre, la présente invention s'applique en particulier aux locaux, tels que vérandas, revêtus d'une toiture transparente présentant une faible pente sur l'horizontale.

Le problème posé par la Demanderesse est de limiter la chaleur excessive à l'intérieur desdits locaux pendant les mois les plus chauds d'été et de favoriser au contraire le captage et l'exploitation des rayonnements solaires pendant les mois d'hiver.

On connaît déjà des systèmes de lamelles fixes pour l'occultation des rayons solaires, mis en place de manière définitive sur la toiture. Ces dispositifs ont pour but de limiter la pénétration du rayonnement solaire direct à l'intérieur d'un local. Cependant, ces systèmes arrêtent aussi bien le rayonnement solaire d'été que celui d'hiver et pénalisent donc les apports solaires d'hiver. Pour ces raisons, on constate dans la pratique que de tels systèmes d'occultation sont peu utilisés. Au mieux, le dimensionnement de ces systèmes doit être déterminé, pour chaque cas particulier, en fonction d'un compromis acceptable entre l'occultation estivale souhaitée et l'occultation hivernale néfaste.

On connaît également des systèmes d'occultation mobiles pouvant pivoter à la manière d'une jalousie à manoeuvre manuelle ou électrique. Ces systèmes ont pour but de rechercher une orientation des lames, composant les systèmes d'occultation, appropriée en fonction du résultat recherché, c'est-à-dire occultation des rayons solaires l'été, et effacement des lames P' hiver afin de laisser passer le rayonnement solaire direct.

Dans un tel cas, l'orientation des lames peut être opérée en fonction de l'appréciation de l'utilisateur, ou être con- trôlée par une commande électrique automatique avec systèmes électroniques. Ces derniers permettent de suivre la course du soleil, et commandent, en conséquence en fonction de la période considérée, l'inclinaison des lames, pour occulter le rayonnement solaire l'été et laisser passer celui-ci l'hiver.

Ces systèmes sont de conception, de fonctionnement et d'adaptation complexes, et s'avèrent relativement peu fiables dans la pratique.

La présente invention vient maintenant proposer un nouveau dispositif de contrôle de l'énergie solaire traversant une toiture transparente d'un local. Ce nouveau dispositif repose sur le fait, constaté par la Demanderesse, que l'angle de pénétration du rayonnement solaire direct par la toiture, dans le local est généralement peu performant en hiver surtout lorsque la pente de celle-ci est faible par rapport à l'horizontale. Le dispositif conforme à la présente invention comprend une pluralité de dièdres parallèles entre eux et présentant chacun une première aile faiblement inclinée sur l'horizontale et au moins partiellement opaque pour occulter les rayons solaires en période estivale, une seconde aile fortement inclinée sur l'horizontale et munie d'une surface réfléchissante de telle sorte qu'en période hivernale, les rayons solaires qui frappent cette surface réfléchissante soient renvoyés en direction de la paroi transparente de la toiture selon une incidence faible par rapport à la normale à celle-ci afin de la traverser, ainsi que des moyens supports pour fixer l'un des dièdres sur la toiture.

Le dispositif conforme à la présente invention n'est donc plus, à l'opposé des dispositifs antérieurement proposés, un simple brise-soleil occultant le rayonnement solaire direct l'été, mais grâce à la seconde aile ainsi prévue, munie d'une surface réfléchissante, le dispositif joue un rôle actif en améliorant sensiblement la performance du rayonnement solaire direct d'hiver, en réfléchissant celui-ci vers l'intérieur du local sous un angle favorable à la pénétration des rayonnements. Le dispositif conforme à la présente invention permet par conséquent une récupération d'énergie appréciable.

Selon une caractéristique importante de la présente invention, l'écartement entre les différents dièdres installés sur un pan de toiture de pente constante, est constant, et la projection horizontale de l'écartement existant entre les dièdres est sensiblement égale à la largeur de la première aile des dièdres.

De préférence, la pente de la toiture est comprise entre 0 et 30° par rapport à l'horizontale. En d'autres termes, la présente invention s'applique tout particulièrement au cas des vérandas ou serres. L'homme de l'art comprendra aisément que la récupération d'énergie est maximale, en hiver, pour de telles pentes de toiture faibles.

Selon le mode de réalisation retenu, l'inclinaison relative des deux ailes de chaque dièdre peut être fixe ou réglable.

Dans ce dernier cas, selon une caractéristique de la présente invention, les deux ailes de chaque dièdre sont articulées entre elles, et il est prévu, d'une part, deux biellettes associées, articulées respectivement sur chacune des ailes, et articulées entre elles, ainsi que, d'autre part, des moyens de verrouillage des biellettes.

Selon un premier mode de réalisation avantageux, les moyens supports comprennent un premier élément rendu solidaire de la toiture, un second élément articulé sur le premier autour d'un axe sensiblement horizontal et adapté pour recevoir en immobilisation les dièdres, ainsi que des moyens de blocage relatifs des deux éléments.

Selon une caractéristique de la présente invention, des stries de positionnement associées sont prévues respectivement sur chacun des deux éléments.

Selon une autre caractéristique de la présente invention, les deux éléments sont munis de moyens de repère visualisant l'inclinaison relative entre les deux éléments.

Selon un second mode de réalisation avantageux, les moyens supports sont formés d'un élément unique adapté pour recevoir en immobilisation les dièdres, et être fixé selon une inclinaison réglable sur la toiture.

De préférence, ledit élément formant moyen support repose sur la toiture par l'intermédiaire d'une surface convexe.

Selon un mode de réalisation avantageux, le dièdre est un profilé en aluminium.

Le cas échéant, la première aile peut être munie de rainures aptes à recevoir des accessoires.

Selon une autre caractéristique avantageuse de la présente invention, autorisant le réglage de l'inclinaison relative des deux ailes de chaque dièdre, l'une des ailes comporte un bourrelet de contour externe généralement convexe avec un resserrement, au niveau duquel, son épaisseur hors tout, en section droite, est minimale, tandis que l'autre aile comporte un logement en creux, à bords convergents, l'orifice ménagé entre ces bords permettant l'introduction du bourrelet présenté sensiblement selon son épaisseur minimale, dans une position dite d'introduction, de telle sorte qu'après pivotement en position dite de travail, le bourrelet soit prisonnier dans le logement et susceptible d'un pivotement relatif à l'égard de ce logement.

D'autres caractéristiques et avantages de la présente invention apparaîtront à la lecture de la description détaillée qui va suivre et en regard des dessins annexés donnés à titre d'exemple non limitatifs et sur lesquels :

- la figure 1 représente une vue schématique en perspective d'un premier mode de réalisation conforme à la présente invention,

- la figure 2 représente une vue schématique en perspective des moyens supports conforme à un second mode de réalisation de la présente invention,

- la figure 3 représente une vue schématique en coupe transversale d'un dièdre rigide conforme à la présente invention,

- la figure 4 représente une vue en coupe transversale d'un dièdre présentant deux ailes dont l'inclinaison est susceptible d'être réglée à volonté,

- la figure 4b représente une variante de réalisation du dispositif de la figure 4a,

- les figures 5a et 5b représentent un schéma illustrant l'installation des dispositifs conformes à la présente invention,

- les figures 6 et 7 illustrent le fonctionnement du
dispositif conforme à la présente invention.

Tel que cela apparaît en particulier sur les figures
5a et 5b, le dispositif pour le contrôle de l'énergie solaire
traversant une toiture transparente, conforme à la présente invention comprend une pluralité de dièdres 10 parallèles entre eux
assemblés sur la toiture à l'aide de moyens supports 50, de préférence sensiblement transversalement à la pente de la toiture.
La disposition particulière des dièdres sera décrite plus en détail dans la suite de la description.

Chacun des dièdres 10 comprend une première aile 11 généralement
plane et rectangulaire faiblement inclinée sur l'horizontale (référencée H-H
sur les figures) et au moins partiellement opaque pour
occulter les rayons solaires en période estivale, ainsi qu'une
seconde aile 12 fortement inclinée sur l'horizontale également
généralement plane et rectangulaire et munie d'une surface réfléchissante 13, de telle sorte qu'en période hivernale les
rayons solaires qui frappent cette surface réfléchissante 13
soient renvoyés vers le bas en direction de la paroi transparente
de la toiture selon une incidence faible par rapport à la normale
à celle-ci, de telle sorte que les rayons solaires ainsi déviés
traversent en majeure partie la paroi transparente de la toiture.

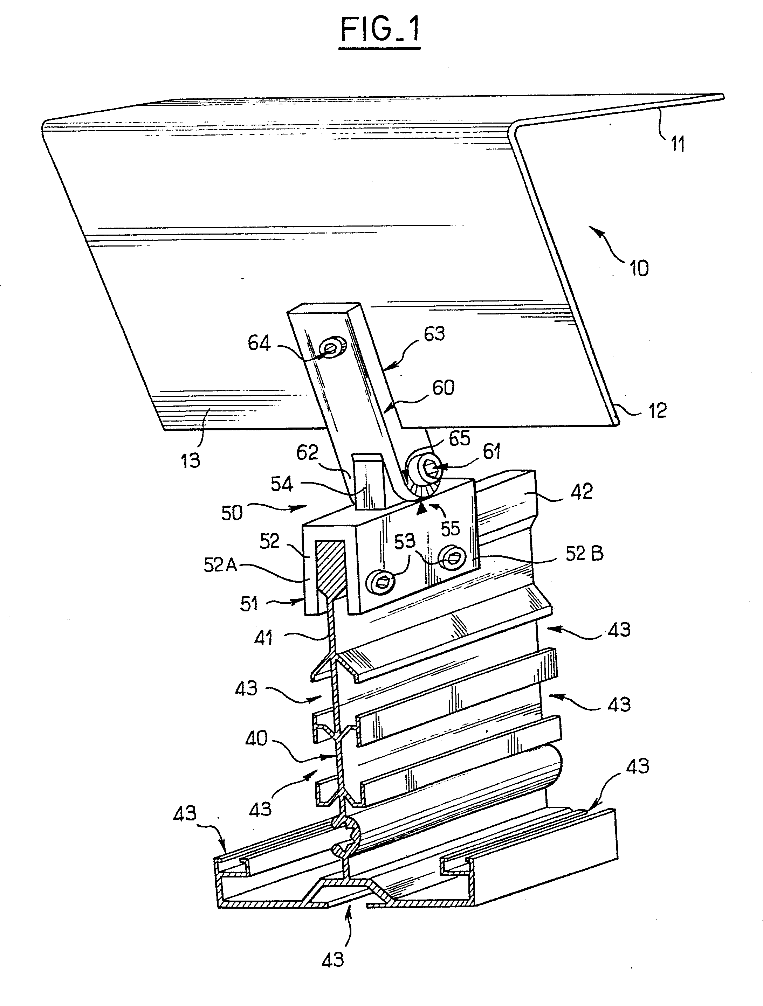

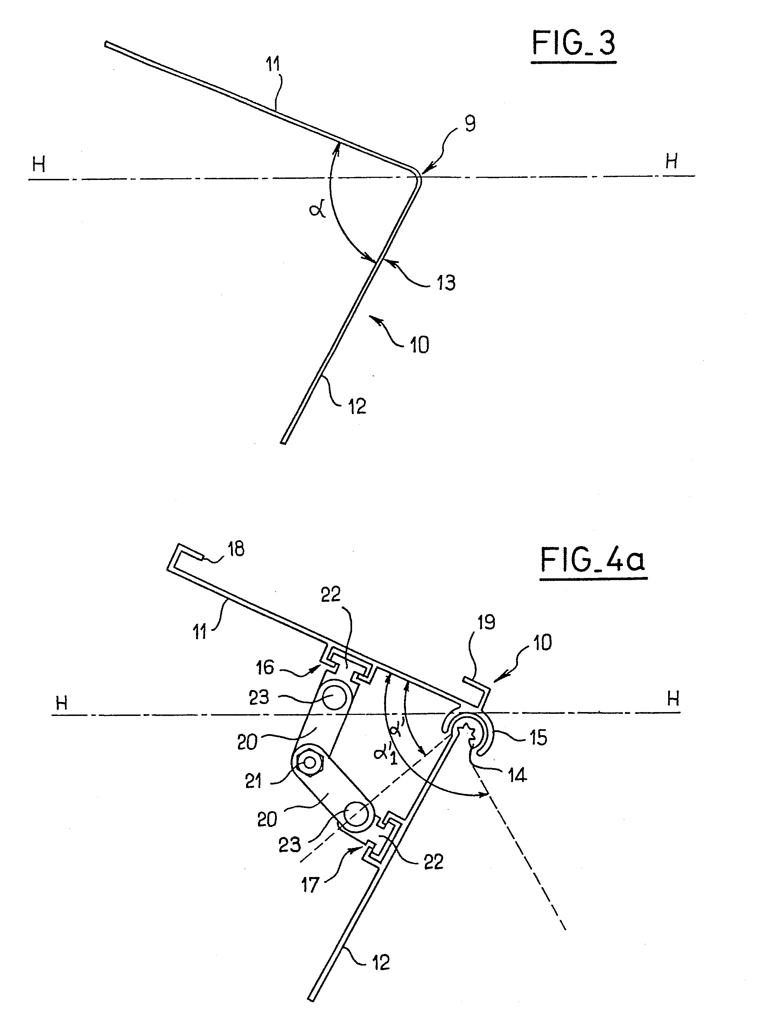

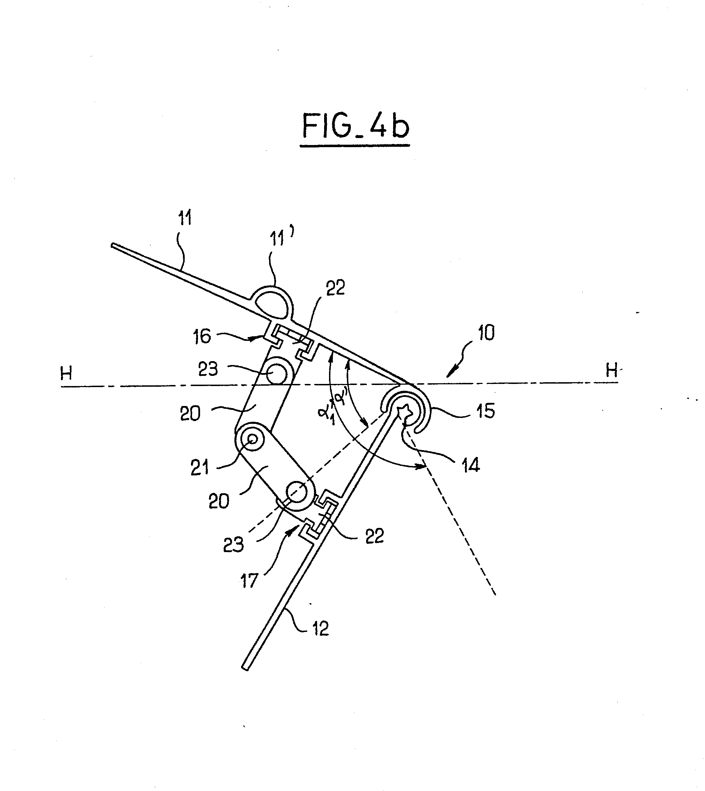

Tel que cela est représenté sur les figures 1 et 3,
l'inclinaison relative $\alpha$ des deux ailes 11, 12 de chaque dièdre
10 peut être fixe. Avantageusement, on peut alors réaliser les
dièdres 10 sous forme de profilés en aluminium. Tel que cela
est également représenté sur la figure 4, on peut prévoir que
l'inclinaison relative des deux ailes 11 et 12 de chaque dièdre
10 est réglable.

Plus précisément, selon le mode de réalisation représenté sur la figure 4, l'une des deux ailes (12) comporte le
long d'un bord longitudinal un bourrelet (14) de contour externe généralement convexe, tel que cylindrique, avec un resserre-

ment au niveau duquel son épaisseur hors tout, en section droite, est minimale. Tandis que l'autre aile (11) comporte, à une extrémité, un logement 15 en creux, à bords convergents. L'orifice ménagé entre les bords convergents dudit logement 15 est adapté pour permettre l'introduction du bourrelet 14 présenté sensiblement selon son épaisseur minimale dans une position dite d'introduction, tandis qu'après pivotement en position dite de travail, le bourrelet 14 est prisonnier dans le logement 15 et susceptible d'un pivotement relatif à l'égard de celui-ci.

Sur la figure 4, on a représenté en traits interrompus, les positions extrêmes que peut prendre la seconde aile 12. Ces positions extrêmes sont obtenues lorsque la seconde aile 12 vient en butée contre les bords du logement 15. L'inclinaison relative minimum est référencée $\alpha'$ et l'inclinaison relative maximum est référencée $x'_1$ sur la figure 4. La valeur de ces inclinaisons sera déterminée en fonction de chaque cas particulier par le positionnement et la forme du bourrelet 14 et du logement 15.

Cette disposition permet d'une part une liaison simple et rapide des deux ailes 11 et 12, tout en proposant une articulation de réalisation simple et économique, aisément démontable le cas échéant.

Pour assurer le verrouillage des deux ailes 11 et 12 dans une position angulaire relative déterminée, on prévoit deux biellettes 20 articulées respectivement sur les ailes 11, 12 d'une part en 23, et articulées entre elles en 21 d'autre part. Plus précisément encore, selon le mode de réalisation représenté sur la figure 4, on prévoit deux équerres 22 dont une branche est insérée dans une rainure 16, 17 à bords convergents présentée par chacune des ailes 11, 12 des dièdres. Ladite branche est fixée dans la rainure 16, 17 à l'aide de tous systèmes classiques appropriés tels qu'un système de vis-pression. L'autre branche de l'équerre, normale au plan moyen des ailes 11, 12, est reliée à l'une des biellettes 20 par l'intermédiaire d'une articulation 23 autorisant la rotation. Les biellettes sont articulées entre elles, à leur autre extrémité, au niveau de l'articulation 21 précitée, composée par exemple d'un système vis-écrou formant par ailleurs des moyens de verrouillage des biellettes, lors du serrage, pour verrouiller dans une position angulaire relative choisie et prédéterminée, les deux ailes 11 et 12.

L'homme de l'art comprendra aisément que quel que soit le mode de réalisation retenu, dièdres 10 rigides ou dièdres 10 réglables, l'inclinaison relative entre les deux ailes 11 et 12 et l'inclinaison de ces ailes sur l'horizontale doit être définie, en fonction de l'inclinaison des rayons solaires, et par conséquent de la latitude de chaque point d'installation considéré.Il convient de noter également que le mode de réalisation représenté sur la figure 3 autorise également une adaptation de l'inclinaison α relative des ailes 11 et 12 par pliage autour de la ligne de jonction 9.

Tel que cela est représenté sur la figure 4, on peut également prévoir, notamment sur la surface supérieure de la première aile 11 de chaque dièdre, des structures,telles que des rainures 18, 19, adaptées pour recevoir tous types d'accessoires tels que par exemple des panneaux de cellules photovoltaïques. Ces accessoires peuvent être retenus par collage, clippage ou tout autre moyen approprié. En particulier, dans le cas d'installation de cellules photovoltaïques, l'énergie ainsi récupérée peut être utilisée pour alimenter des ventilateurs capables de créer une circulation d'air contribuant ainsi, en coopérant avec le dispositif, à la réduction des surchauffes d'été.

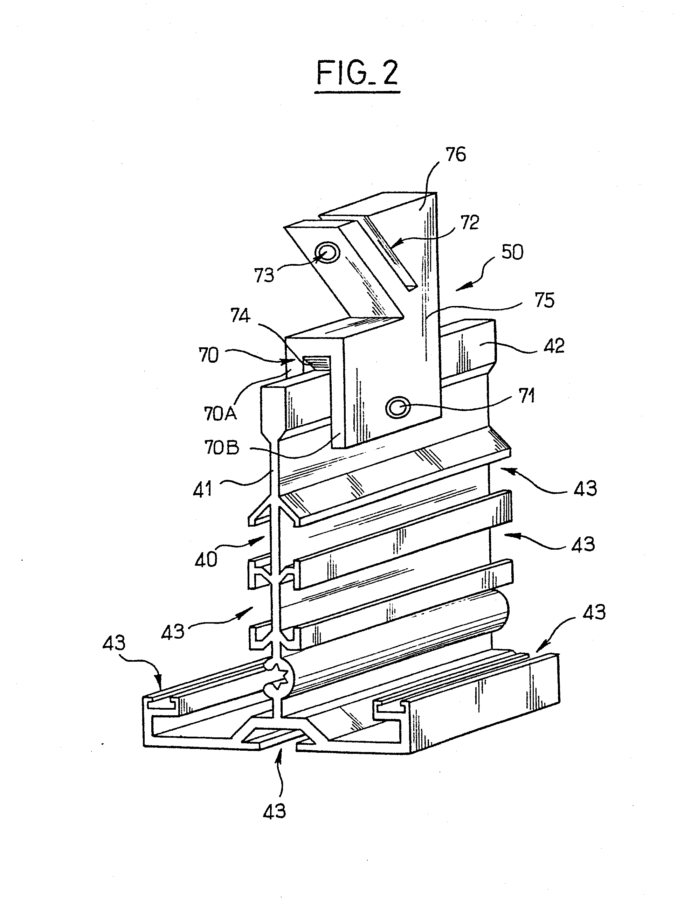

On va maintenant décrire les différents types de moyens supports pour fixer des dièdres sur la toiture, représentés sur les figures 1 et 2.

Bien entendu, ces moyens supports 50 devront être adaptés à la structure, notamment aux chevrons ou poutres de la toiture.

Selon le mode de réalisation représenté sur les figures, les pièces de la toiture supportant les moyens supports des dièdres sont formées de profilés 40 de forme générale en T inversé. De telles pièces 40 sont classiques en elles-mêmes et ne seront pas décrites en détail. On reconnaît sur les figures de nombreuses rainures 43 à bords convergents destinées à recevoir tous types d'accessoires appropriés. Les moyens supports qui vont être décrits par la suite, sont adaptés pour être immobilisés sur l'extrémité supérieure de l'âme centrale 41, verticale, munie au niveau de son arête libre d'un bourrelet 42 de renforcement de section droite généralement parallélépipédique.

Selon le mode de réalisation représenté sur la figure 1, les moyens supports 50 comprennent un premier élément 51, fixé sur la pièce 40 de toiture, et d'un second élément 60 articulé sur le premier en 61, et adapté pour recevoir en immobilisation les dièdres 10.

Plus précisément, le premier élément 51 se compose d'un corps 52 d'enveloppe généralement parallélépipédique, en forme d'étrier, de section droite sensiblement en U inversé. Le corps en étrier 52 est inséré sur le bourrelet 42 précité de la pièce de toiture, et immobilisé sur celui-ci lorsque son embase repose sur le bourrelet à l'aide, par exemple, de vis-pression 53 engagées dans des orifices taraudés ménagés dans la paroi de l'étrier 52, et venant en appui, au niveau de leur extrémité, contre le bourrelet 42. Un assemblage par clippage ou autre moyen peut aussi être envisagé.

Au niveau de son embase, le corps formant étrier 52 est muni d'un prolongement 54 en saillie vers l'extérieur, à l'opposé des branches de l'étrier. Le prolongement 54 est lui-même chevauché par une chape 62 présentée par le second élément 60. Le prolongement 54 et la chape 62 sont munis d'orifices traversants respectifs destinés à être portés en regard, de telle sorte qu'un axe 61 inséré dans ceux-ci assure l'articulation des moyens supports 50. De préférence, l'axe 61 est formé d'un organe fileté constituant des moyens de blocage relatifs des deux éléments, lors du serrage.

Le second élément 60 est muni d'une feuillure 63 débouchant à l'opposé de la chape 62 et adaptée pour recevoir l'une des ailes, telles que la seconde aile 12 des dièdres 10. Les dièdres sont immobilisés, sur les moyens supports 60, à l'aide par exemple de vis-pression 64 engagées dans un alésage fileté prévu dans la paroi du second élément 60 et débouchant dans la feuillure 63.

Selon le mode de réalisation représenté sur la figure 1, le plan moyen de la feuillure 63 est perpendiculaire à celui des branches 52A, 52B de l'étrier 52.

Le premier élément 51 étant fixé sur la pièce 40 de toiture grâce aux vis-pression 53 et, le dièdre 10 étant fixé sur le second élément 60, grâce aux vis-pression 64, on peut aisément régler l'inclinaison relative entre le second élément 60 et le premier élément 51, et par conséquent l'inclinaison des ailes 11 et 12 des dièdres 10 sur l'horizontale en intervenant sur l'articulation 61.

De préférence, tels que représentés sur la figure 1, les moyens supports 50 sont munis de moyens de repère visualisant l'inclinaison relative entre les deux éléments 51 et 60. En l'espèce, les moyens de repère sont constitués d'un indice 55 sur la paroi latérale du premier élément 51 et d'une échelle graduée annulaire 65, disposée en regard, autour de la tête de vis 61, sur la paroi latérale de la chape 62.

Afin de faciliter le positionnement angulaire par pas des deux éléments des moyens supports, on peut prévoir une pluralité de stries de positionnement (non représentées sur la figure 1), d'une part sur la surface latérale du prolongement 54, d'autre part sur la surface interne de la chape 62. Le cas échéant, ces stries peuvent remplacer les moyens de verrouillage formés par la vis 61.

Tel que cela est représenté sur la figure 2, on peut également prévoir des moyens supports 50 formés d'un élément unique adaptés pour recevoir en immobilisation les dièdres 10 et être fixés, selon une inclinaison réglable sur une pièce de charpente 40, de la toiture.

Plus précisément, on peut ainsi prévoir une pièce support 75 présentant un étrier 70 d'enveloppe sensiblement parallélépipédique et de section droite générale en U inversé, destiné
à chevaucher le renforcement 42 précité. Une vis-pression 71, ou
un organe équivalent, engagée dans un orifice taraudé prévu
dans la paroi latérale de l'étrier 70 assure la fixation des
moyens supports 50 sur la pièce 40 selon une position angulaire
choisie. Pour ce faire, on prévoit de préférence que la surface
interne 74 de l'embase de l'étrier 70, c'est-à-dire la surface
disposée entre les deux branches latérales parallèles 70A et 70B
de l'étrier 70 est une surface convexe, telle que cylindrique,
d'axe perpendiculaire aux branches précitées ou sphérique. Ainsi,
le contact permanent entre les moyens supports 50 et la pièce 40
est défini par un point ou une génératrice de cette surface convexe, ce qui permet un réglage simple et rapide de l'inclinaison
des moyens supports 50.

Ces derniers comportent d'autre part, à l'opposé des
branches 70A et 70B de l'étrier 70, une structure 76 munie d'une
feuillure 72 débouchant à l'opposé de l'étrier 70, de préférence
de direction généralement perpendiculaire à la direction des
branches de l'étrier 70, et destinée à recevoir, de façon comparable au mode de réalisation représenté sur la figure 1, un dièdre 10. Celui-ci est alors immobilisé dans la feuillure 72 correspondante grâce à au moins une vis-pression 73 engagée dans
un alésage fileté ménagé dans la paroi latérale de la structure
76 et débouchant dans la feuillure 72.

Là encore, lorsqu'un dièdre 10 est immobilisé dans la
feuillure 72 grâce à une vis-pression 73, l'inclinaison des
moyens supports, et par conséquent l'inclinaison des ailes 11 et
12 des dièdres sur l'horizontale peut être aisément réalisée en
intervenant sur la vis-pression 71 destinée à fixer les moyens
supports 50 sur la pièce 40 de    charpente.

Selon le mode de réalisation représenté sur la figure
2, le plan moyen de la feuillure 72 est incliné sur le plan moyen de l'embase de l'étrier 50 suivant un angle tel, qu'il permettra une utilisation optimale des effets brise-soleil et réflecteur du dièdre ; d'autre part la direction de la feuillure 72 est perpendiculaire aux branches 70A et 70B de l'étrier 50.

Bien entendu, pour un dièdre 10 donné, on prévoit de préférence une pluralité de moyens supports répartis sur la longueur de celui-ci. Le nombre précis de moyens supports utilisés est déterminé en fonction de la longueur de chaque dièdre 10 pour obtenir une immobilisation satisfaisante.

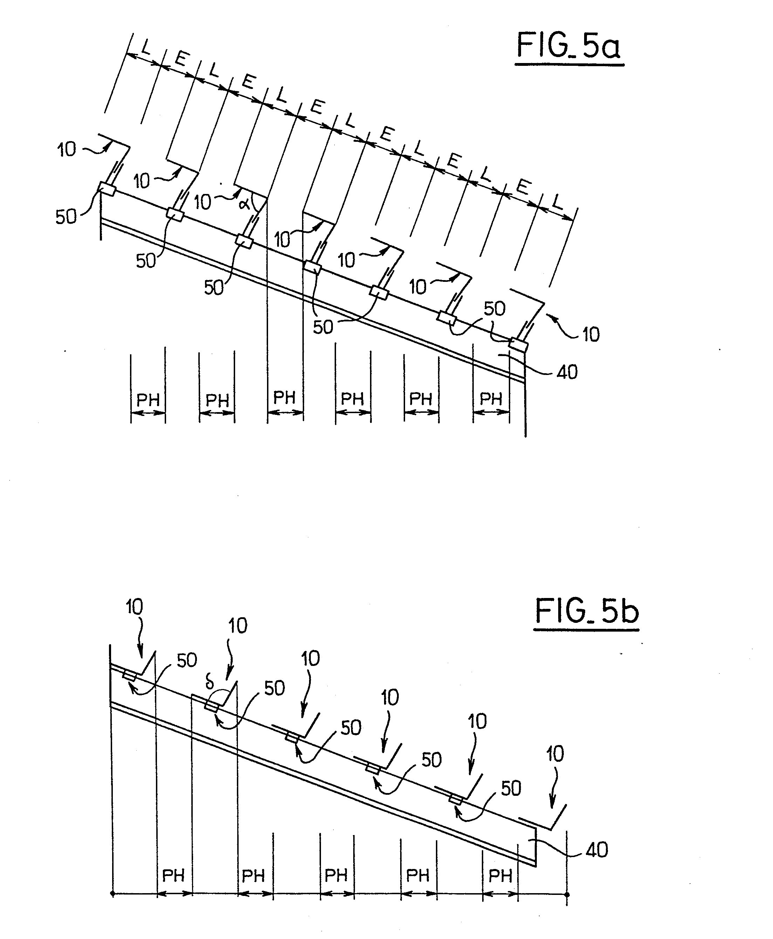

On a représenté schématiquement sur les figures 5a et 5b, une pluralité de dièdres 10 parallèles immobilisés sur une poutre 40 de charpente transversalement à la pente à l'aide de moyens supports 50. Tel que cela est schématiquement illustré, selon une caractéristique importante de la présente invention, pour un pan de toiture de pente constante, l'écartement (référencé E) entre les différents dièdres 10 est constant, et la projection horizontale (référencée PH) de l'espacement existant entre les dièdres adjacents est sensiblement égale à la largeur L de la première aile 11 des dièdres. La Demanderesse a déterminé qu'une telle disposition permettait un compromis très satisfaisant sur l'amplitude du rayonnement solaire occulté dans les mois d'été.

Tel que cela a été précédemment indiqué, l'angle particulier α présenté par les ailes 11 et 12 des dièdres 10, ainsi que l'inclinaison de chacune de celles-ci sur l'horizontale H-H seront déterminés en fonction de chaque cas de pose particulier et en fonction des informations bien connues de l'homme du métier en relation avec la latitude considérée.

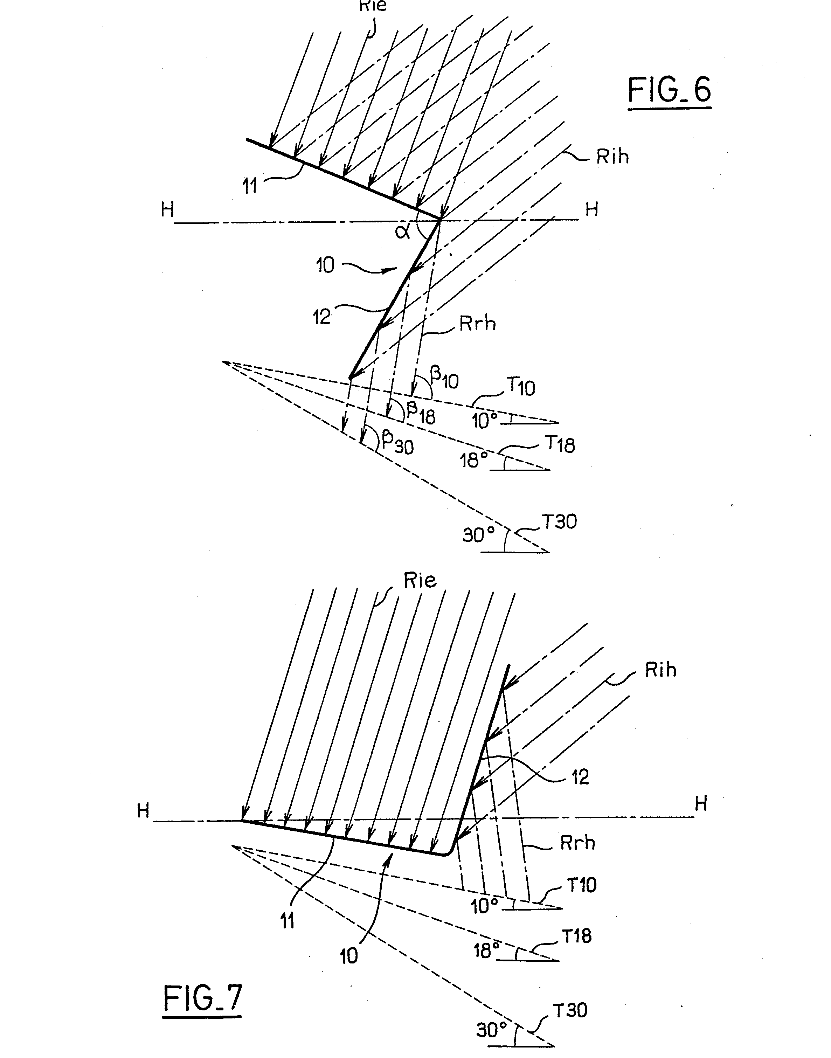

On va maintenant préciser la détermination de ces inclinaisons en regard des figures 6 et 7.

Sur ces figures, la direction des rayons incidents d'été à un instant donné chaud de la journée a été représentée sous forme de traits parallèles continus référencés Rie, tandis que les rayons incidents d'hiver au même instant donné de la même journée sont représentés sous forme de traits interrompus référencés Rih.

Les rayons réfléchis en hiver par la surface 13 de la seconde aile 12 sont référencés Rrh.

Sur les figures 6 et 7, trois types d'inclinaison de toiture présentant respectivement une inclinaison de 10°, 18° et 30° sur l'horizontale H-H sont représentés en traits interrompus référencés $T_{10}$, $T_{18}$ et $T_{30}$.

Plus précisément, tel que cela est représenté sur la figure 6, on prévoit l'inclinaison de la première aile 11 sur l'horizontale H-H telle que le plan moyen de cette aile 11 soit sensiblement perpendiculaire à la direction incidente des rayons solaires Rie dans les mois les plus chauds de l'année à un instant t donné de façon à occulter une partie importante de ceux-ci, tandis que l'inclinaison de la seconde aile 12 sur l'horizontale H-H est forte et déterminée de telle sorte que les rayons Rih qu'elle réfléchit en Rrh aux instants les plus ensoleillés des périodes hivernales soient renvoyés sensiblement perpendiculairement au plan moyen ($T_{10}$, $T_{18}$ ou $T_{30}$) de la toiture, de telle sorte que ces rayons traversent en majeure partie cette toiture. L'angle d'incidence sur la toiture $T_{10}$, $T_{18}$ ou $T_{30}$ ainsi produit est référencé respectivement $\beta_{10}$, $\beta_{18}$, $\beta_{30}$. Bien entendu cet angle ne peut être constamment égal à 90°, mais reste proche de celui-ci.

Tel que cela est représenté sur la figure, on peut de même disposer l'aile 11 occultant les rayons solaires Rie en période estivale à la base de l'aile 12 réfléchissant les rayons solaires Rih en période hivernale en direction de la toiture en Rrh.

Il apparaît clairement à l'examen des figures qu'une très faible partie des rayons Rih est occultée en hiver, surtout grâce au mode de réalisation représenté sur la figure 7, alors qu'au contraire, une partie très appréciable des rayons est renvoyée en Rrh selon un angle favorable pour traverser la paroi transparente, c'est-à-dire pratiquement perpendiculairement à celle-ci.

La valeur limite acceptable de l'angle d'incidence des
rayons Rrh sur la paroi transparente, pour éviter une réflexion
sur celle-ci, et donc l'inclinaison de l'aile 12, sur l'horizontale sera déterminée par l'homme de l'art en fonction des lois
classiques de l'optique et notamment de l'indice du milieu formant ladite paroi transparente, par exemple du verre.

Selon un mode de réalisation particulier, adapté pour
un cas d'installation à des latitudes voisines de 45° Nord, on
peut prévoir une inclinaison de l'aile 11 sur l'horizontale de
l'ordre de 15 à 35°, et une inclinaison de la seconde aile 12
sur l'horizontale de l'ordre de 45 à 65°, la largeur de la première aile étant de l'ordre de 80 mm, et la largeur de la seconde aile étant de 70 mm. Des dièdres formés de profilés en
aluminium traités par anodisation ont donné de bons résultats.
Le cas échéant, on pourra prévoir un revêtement réfléchissant
ou partiellement opaque sur les dièdres (films ou autres).

Bien entendu, la présente invention n'est pas limitée
aux modes de réalisation qui viennent d'être décrits à partir
desquels on pourra envisager de nombreuses variantes conformes
à l'esprit de l'invention. En particulier, la première aile 11
des dièdres pourra être l'objet de diverses modifications rendant
celle-ci apte à recevoir des accessoires ou des capteurs solaires, tels que cellules photovoltaïques ou absorbeurs de capteurs
actifs (éléments tubulaires dans lesquels circule un fluide
assurant le transfert des calories). De tels capteurs actifs
pourront soit être intégrés à ladite aile 11, soit être portés
dans des rainures prévues sur celle-ci.

Une telle variante de réalisation apparaît sur la
figure 4b sur laquelle un élément tubulaire 11' intégré à
l'aile 11 est vu en section transversale.

Bien entendu, le nombre et la section de ces éléments
tubulaires pourront faire l'objet de diverses modifications.

Le mode de réalisation représenté sur la figure 4b
diffère de celui de la figure 4a par le fait qu'il ne comporte
pas de rainures 18, 19, mais qu'il est muni en revanche d'éléments tubulaires 11'. De ce fait, le mode de réalisation représenté sur la figure 4b ne sera pas décrit plus en détail.

REVENDICATIONS

1. Dispositif pour le contrôle de l'énergie solaire traversant une toiture transparente d'un local, caractérisé par le fait qu'il comprend :

- une pluralité de dièdres (10) parallèles entre eux et présentant chacun

  . une première aile (11) faiblement inclinée sur l'horizontale et au moins partiellement opaque pour occulter les rayons solaires en période estivale,

  . une seconde aile (12) fortement inclinée sur l'horizontale et munie d'une surface (13) réfléchissante de telle sorte qu'en période hivernale, les rayons solaires qui frappent cette dernière soient renvoyés en direction de la paroi transparente de la toiture selon une incidence faible par rapport à la normale à celle-ci afin de la traverser, et

- des moyens supports (50) pour fixer les dièdres (10) sur la toiture (40).

2. Dispositif pour le contrôle de l'énergie solaire, selon la revendication 1, caractérisé par le fait que sur un pan de toiture de pente constante, l'écartement (E) entre les différents dièdres (10) est constant, et par le fait que la projection horizontale (PH) de l'écartement existant entre les dièdres (10) est sensiblement égale à la largeur (L) de la première aile (11) des dièdres.

3. Dispositif pour le contrôle de l'énergie solaire, selon l'une des revendications 1 ou 2, caractérisé par le fait que la pente de la toiture (40) est comprise entre 0° et 30° par rapport à l'horizontale.

4. Dispositif pour le contrôle de l'énergie solaire, selon l'une des revendications 1 à 3, caractérisé par le fait que l'inclinaison (α) relative des deux ailes (11, 12) de chaque dièdre (10) est fixe.

5. Dispositif pour le contrôle de l'énergie solaire, selon l'une des revendications 1 à 3, caractérisé par le fait que l'inclinaison (α) relative des deux ailes (11, 12) de chaque dièdre (10) est réglable.

6. Dispositif pour le contrôle de l'énergie solaire, selon la revendication 5, caractérisé par le fait que les deux ailes (11, 12) de chaque dièdre (10) sont articulées entre elles et par le fait qu'il est prévu deux biellettes (20) associées, articulées respectivement sur chacune des ailes d'une part (23), et articulées entre elles d'autre part (21), ainsi que des moyens de verrouillage des biellettes.

7. Dispositif pour le contrôle de l'énergie solaire, selon l'une des revendications 1 à 6, caractérisé par le fait que les moyens support (50) comprennent un premier élément (51) rendu solidaire de la toiture (40), un second élément (60) articulé (61) sur le premier autour d'un axe sensiblement horizontal et adapté pour recevoir en immobilisation les dièdres (10), ainsi que des moyens de blocage relatif des deux éléments (figure 1).

8. Dispositif pour le contrôle de l'énergie solaire, selon la revendication 7, caractérisé par le fait que des stries de positionnement associées sont prévues respectivement sur chacun des deux éléments (51, 60).

9. Dispositif pour le contrôle de l'énergie solaire, selon l'une des revendications 6 ou 7, caractérisé par le fait que les deux éléments (51,60) sont munis de moyens (55, 65) de repère visualisant l'inclinaison relative entre les deux éléments.

10. Dispositif pour le contrôle de l'énergie solaire, selon l'une des revendications 1 à 6, caractérisé par le fait que les moyens supports (50) sont formés d'un élément (75) adapté pour recevoir en immobilisation les dièdres (10) et être fixé selon une inclinaison réglable sur la toiture (40).

11. Dispositif pour le contrôle de l'énergie solaire, selon la revendication 10, caractérisé par le fait que ledit élément (75) formant moyen support repose sur la toiture (40) par l'intermédiaire d'une surface convexe (74).

12. Dispositif pour le contrôle de l'énergie solaire, selon l'une des revendications 1 à 11, caractérisé par le fait que le dièdre (10) est un profilé en aluminium.

13. Dispositif pour le contrôle de l'énergie solaire, selon l'une des revendications 1 à 12, caractérisé par le fait que la première aile (11) est munie de rainures (18) aptes à recevoir des accessoires.

14. Dispositif pour le contrôle de l'énergie solaire, selon la revendication 7, caractérisé par le fait que l'une (12) des ailes comporte un bourrelet (14) de contour externe généralement convexe avec un resserrement, au niveau duquel, son épaisseur hors tout, en section droite, est minimale, et que l'autre aile (11) comporte un logement (15) en creux à bords convergents, l'orifice ménagé entre ces bords permettant l'introduction du bourrelet (14) présenté sensiblement selon son épaisseur minimale, dans une position dite d'introduction, tandis qu'après pivotement en position dite de travail, le bourrelet (14) est prisonnier dans le logement (15), et susceptible d'un pivotement relatif à l'égard de ce logement (15).

15. Dispositif selon l'une des revendications 1 à 12, caractérisé par le fait que le première aile (11) est munie d'une pluralité d'éléments tubulaires, dans lesquels circule un fluide, pour former un capteur actif.

## FIG_1

# FIG_2

## FIG_3

## FIG_4a

# FIG_4b

0120755

## FIG. 5a

## FIG. 5b

## FIG. 6

Rie

Rih

11

H                H

α

10

12

Rrh

$\beta_{10}$   T10

$\beta_{18}$   10°

$\beta_{30}$   T18

18°

T30

30°

Rie

Rih

12

H                                H

Rrh

T10

10°

T18

11

18°

10

## FIG. 7

T30

30°

**Office européen des brevets**

# RAPPORT DE RECHERCHE EUROPEENNE

Numéro de la demande

EP 84 40 0445

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 353 026 (MIQUEL) | | F 24 J 3/02 |
| | | | A 01 G 9/22 |
| | | | E 04 F 10/06 |
| | --- | | |
| A | WO-A-8 002 712 (KÖSTER) | | |
| | --- | | |
| A | FR-A-2 429 306 (BERREBI) | | |
| | --- | | |
| A | FR-A-2 345 068 (POSNANSKY) | | |
| | --- | | |
| A | DE-B-1 260 754 (ESSER) | | |
| | ----- | | |

### DOMAINES TECHNIQUES RECHERCHES (Int. Cl. ³)

F 24 J
A 01 G
E 04 F
E 06 B

Le présent rapport de recherche a été établi pour toutes les revendications

| Lieu de la recherche | Date d'achèvement de la recherche | Examinateur |
|---|---|---|
| LA HAYE | 15-06-1984 | PERROTTA A. |